# EUROPÄISCHE PATENTANMELDUNG

(11) **EP 3 208 674 A1**
(43) Veröffentlichungstag der Anmeldung: **23.08.2017**
(21) Anmeldenummer: 16156564.3
(22) Anmeldetag: 19.02.2016
(51) Int. Cl.: G05B 19/418, G05B 19/05, H04L 12/26

(54) **NETZWERKSYSTEM UND VERFAHREN ZUR DATENÜBERTRAGUNG IN EINEM NETZWERKSYSTEM**

(71) Anmelder: Siemens Aktiengesellschaft, 80333 München (DE)
(72) Erfinder: Ripplinger, Thomas, 76149 Karlsruhe (DE)

(57) **Zusammenfassung**

Die Erfindung betrifft ein Netzwerksystem umfassend zumindest,
- einem ersten Netzwerkteilnehmer und einem zweiten Netzwerkteilnehmer sowie eine Kommunikationseinheit (3) mit einer ersten Schnittstelle (3a) und einer zweiten Schnittstelle (3b), wobei die erste Schnittstelle (3a) mit dem ersten Netzwerkteilnehmer und die zweite Schnittstelle (3b) mit dem zweiten Netzwerkteilnehmer in Verbindung steht zur Datenübertragung zwischen dem ersten Netzwerkteilnehmer und dem zweiten Netzwerkteilnehmer,
- wobei der erste Netzwerkteilnehmer in einem Automatisierungsnetz eines Automatisierungssystems (1) angeordnet ist,
- wobei der zweiten Netzwerkteilnehmer eine Cloud-Computing Infrastruktur aufweist,
wobei
- die erste Schnittstelle (3a) der Kommunikationseinheit (3) als Ein-/Ausgabemodul (I/O Modul) ausgestaltet ist,
- die zweite Schnittstelle (3b) der Kommunikationseinheit (3) als Agent ausgestaltet ist.

Weiterhin betrifft die Erfindung ein Verfahren.

## Beschreibung

Die Erfindung betrifft ein Netzwerksystem umfassend zumindest:
- einen ersten Netzwerkteilnehmer und einen zweiten Netzwerkteilnehmer sowie eine Kommunikationseinheit mit einer ersten Schnittstelle und einer zweiten Schnittstelle, wobei die erste Schnittstelle mit dem ersten Netzwerkteilnehmer und die zweite Schnittstelle mit dem zweiten Netzwerkteilnehmer in Verbindung steht, zur Datenübertragung zwischen dem ersten Netzwerkteilnehmer und dem zweiten Netzwerkteilnehmer,
- wobei der erste Netzwerkteilnehmer in einem Automatisierungsnetz eines Automatisierungssystems angeordnet ist,
- wobei der zweite Netzwerkteilnehmer eine Cloud-Computing Infrastruktur aufweist.

Zudem betrifft die Erfindung ein Verfahren, welches dazu geeignet ist, um auf dem erfindungsgemäßen Netzwerksystem zu laufen.

Als Automatisierungssystem einer Anlage werden im folgenden Geräte und Installationen bezeichnet, die zur Steuerung und/oder Überwachung eines technischen Prozesses, z. B. eines Fertigungsprozesses, eingesetzt werden und an sich bekannt sind. Zu den Geräten gehören z. B. speicherprogrammierbare Steuerungen, dezentrale Peripheriegeräte, Bedien- und Beobachtungssysteme oder dergleichen, welche zu einem gemeinsamen Automatisierungsnetz über eine Datenübertragungseinheit, z. B. ein LAN-Netzwerk (LAN = Local Area Network), miteinander verbunden sind. Solche Geräte oder Netze werden zusammenfassend als Automatisierungskomponenten bezeichnet. Im Umfeld, "IoT" (Internet of Things), werden Daten gesammelt und genutzt um durch Analyse-Methoden Mehrwerte zu generieren. Die Datenverarbeitung erfolgt hierbei zentralisiert in einem externen Rechenzentrum bzw. Cloud-System.

Die Daten werden aus den unterlagerten Automatisierungssystem ausgelesenen und über eine ausgehende Verbindung beispielsweise via Internet an das Cloud-System weitergeleitet.

Das Abgreifen von Anlagendaten aus dem AutomatisierungsSystem oder anderen lokalen Geräten einer Anlage ("IoT Daten") kann über Feldbusse erfolgen. Dabei können feldbusbasierte Systeme durch ethernet-basierte Systeme wie Profinet ersetzt oder ergänzt werden. Damit ist eine echtzeitfähige Datenübertragung möglich.

Bisher werden zudem Agenten eingesetzt. Diese sind als dedizierte Software ausgestaltet, welche Anlagendaten durch Nutzung vorhandener Interfaces (z.B. OPC, Modbus) sammeln und weiter an das Cloud-System schicken.

Auch kann das Automatisierungssystem um ein cloudfähiges Transferprotokoll erweitert (z.B. ISB-Micro Agent Protokoll) werden.

Jedoch sind durch die oben genannten Systeme entweder nur begrenzte Abtastraten der Automatisierung möglich (z.B. OPC typisch 1 sec) oder es sind Eingriffe in vorhandende Systeme auf der Anlage notwendig, z.B. ein Spezial-Engineering für Cloud-Connectivity. Letzteres ist jedoch sehr aufwändig und daher sehr kostenintensiv.

Vor diesem Hintergrund besteht eine der Erfindung zugrundeliegende Aufgabe darin, eine Möglichkeit in Form eines Netzwerksystems und eines Verfahrens bereitzustellen, um auf einfache Art und Weise zwischen zwei Netzwerkteilnehmern einen Datenaustausch mit hohem Datenaufkommen/-volumen zu gewährleisten.

Die auf das Netzwerksystem bezogene Aufgabe wird gelöst durch die Angabe eines Netzwerksystems umfassend zumindest,
- einen ersten Netzwerkteilnehmer und einen zweiten Netzwerkteilnehmer sowie eine Kommunikationseinheit mit einer ersten Schnittstelle und einer zweiten Schnittstelle, wobei die erste Schnittstelle mit dem ersten Netzwerkteilnehmer und die zweite Schnittstelle mit dem zweiten Netzwerkteilnehmer in Verbindung steht, zur Datenübertragung zwischen dem ersten Netzwerkteilnehmer und dem zweiten Netzwerkteilnehmer,
- wobei der erste Netzwerkteilnehmer in einem Automatisierungsnetz eines Automatisierungssystems angeordnet ist
- wobei der zweite Netzwerkteilnehmer eine Cloud-Computing Infrastruktur aufweist, und wobei
- die erste Schnittstelle der Kommunikationseinheit als Ein-/Ausgabemodul (I/O Modul) ausgestaltet ist
- die zweite Schnittstelle als Agent ausgestaltet ist.

Die auf das Verfahren bezogene Aufgabe wird gelöst durch die Angabe eines Verfahrens zur Datenübertragung in einem Netzwerksystem umfassend die Schritte:
- Bereitstellen eines ersten Netzwerkteilnehmers und eines zweiten Netzwerkteilnehmer sowie eine Kommunikationseinheit mit einer ersten Schnittstelle und einer zweiten Schnittstelle, wobei die erste Schnittstelle mit dem ersten Netzwerkteilnehmer und die zweite Schnittstelle mit einem zweiten Netzwerkteilnehmer, zur Datenübertragung zwischen dem ersten Netzwerkteilnehmer und dem zweiten Netzwerkteilnehmer in Verbindung steht,
- Anordnen des ersten Netzwerkteilnehmers in einem Automatisierungsnetz eines Automatisierungssystems
- Bereitstellen einer Cloud-Computing Infrastruktur im zweiten Netzwerkteilnehmer,
   und wobei
- die erste Schnittstelle der Kommunikationseinheit als Ein-/Ausgabemodul ausgestaltet wird,
- die zweite Schnittstelle als Agent ausgestaltet wird.

Durch die Erfindung wird eine Auskopplung von volumenreichen Anlagendatensätzen zur weiteren Verarbeitung in einem Remote Rechenzentrum ("Cloud System") ermöglicht. Dabei wird durch die Erfindung eine Datenreduktion bzw. eine Auswahl beim Übergang vom Feldbus zu Cloud-Computing Infrastruktur ermöglicht. Vorteilhafterweise ist zudem eine Umsetzung / Engineering mit bereits vorhandenem Treiberbausteinen/Equipment möglich. Auch ist nur eine minimale Mehrfachbelastung der CPU-Last gegeben.

Durch die Erfindung sind extrem hohe Abtastraten, beispielsweise von einigen Mikrosekunden, des Automatisierungssystems möglich.

Ebenso ist eine sichere Datenauskopplung durch eine definierte Schnittstelle möglich. Bei Bedarf ist auch eine sichere Einkopplung von der Cloud-Computing Infrastruktur zum ersten Netzwerkteilnehmer, hier der Automatisierungsanlage möglich, da die Daten an einem definiertem Treiberbaustein ankommen und somit kein Vollzugriff auf die SPS (speicherprogrammierbare Steuerung) möglich ist.

In den Unteransprüchen sind weitere vorteilhafte Maßnahmen aufgelistet, die beliebig miteinander kombiniert werden können, um weitere Vorteile zu erzielen.

Bevorzugt weist die Kommunikationseinheit zumindest zwei Datenübertragungsmoden zur Datenübertragung der vom ersten Netzwerkteilnehmer erfassten Daten an den zweiten Netzwerkteilnehmer auf. Vorteilhafterweise werden bei einem ersten Datenübertragungsmodus die Daten des Automatisierungssystems erfasst, insbesondere kontinuierlich erfasst. Anschließend wird auf die erfassten Daten eine Aggregationsfunktion oder/und sonstige Verdichtungs- und Voranalysefunktion angewendet.

Dabei beinhaltet die Aggregationsfunktion die Bildung des Mittelwerts und/oder des Minimums bzw. Maximums und/oder der Summe und/oder sonstige Verdichtungs- und Voranalysefunktionen derjenigen Daten, die in einer vorbestimmten Zeit n erfasst worden sind. Auch kann die Aggregationsfunktion/ Verdichtungs- und Voranalysefunktion die Bestimmung der/des zuletzt erfassten Datensatzes derjenigen Daten, die in einer vorbestimmten Zeit n erfasst worden sind, beinhaltet. Selbstverständlich sind die Aggregationsfunktion oder sonstige Verdichtungs- und Voranalysefunktion hierauf nicht eingeschränkt.

Zudem ist bevorzugt zumindest ein zweiter Datenübertragungsmodus vorgesehen, bei dem aus den von der Kommunikationseinheit erfassten Daten ein Datenpaket für nachfolgende Verarbeitungsschritte erzeugt wird, welches an die Cloud versendbar ist.

Zusammenfassend sind durch die zwei Datenübertragungsmoden zumindest zwei einstellbare Umsetzungen der hohen Datenrate z.B. am Feldbus des ersten Netzwerkteilnehmer in eine niedrigere Rate für "Cloud Transfer", d.h. den Datentransfer zum zweiten Netzwerkteilnehmer möglich:
Dabei ist ein erster Datenübertragungsmodus in Form einer kontinuierlichen Datenerfassung und anschließender Berechnung des Minimunwertes /Maximumwertes /Durschnittswertes /Zuletzgesendeten_Datensatzes alle n Sekunden vorgesehen, wobei n konfigurierbar ist, wobei anschließend das Resultat der Berechnung an den zweiten Netzwerkteilnehmer gesendet wird.

Zudem ist ein zweiter Datenübertragungsmodus vorgesehen, bei dem die erfassten Daten in einem Zeitfenster zu einem Datenpakete zusammengefasst werden und das resultierende Datenpaket an den zweiten Netzwerkteilnehmer zur dortigen Weiterverarbeitung gesendet wird. Vorteilhafterweise handelt es sich bei diesen Daten um die Quell-/bzw. Rohdaten.

Dabei kann die Versendung des Datenpaketes durch einen Trigger erfolgen, wobei der Trigger durch den ersten Netzwerkteilnehmer gesteuert wird. D.h., es wird dadurch vorteilhafterweise eine exakte Steuerung der Datenauskopplung mittels einem Signal des Anwenderprogramms ermöglicht.

In einer weiteren bevorzugten Ausgestaltung umfasst die Kommunikationseinheit einen Sniffer Mode. Durch den Sniffer Mode ist eine Rückwirkung auf den ersten Netzwerkteilnehmer ausgeschlossen. Dies kann z.B. durch einen TAP-Anschluss (TAP=terminal access point) realisiert sein.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:

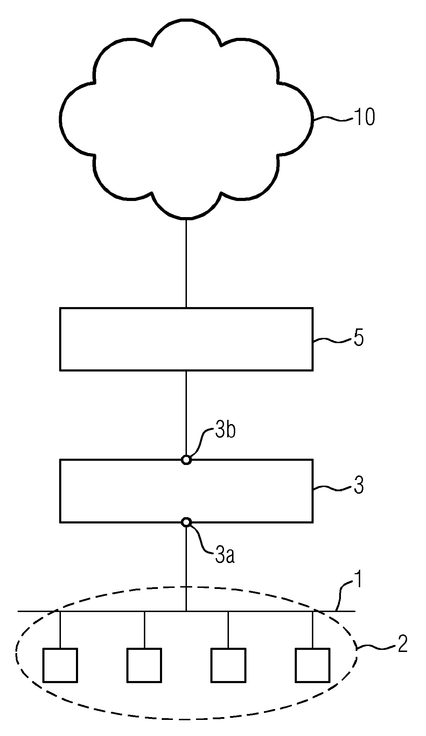

FIG 1: eine schematische Darstellung der Erfindung.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

In Automatisierungsanlagen 2 mit einem Automatisierungssystem 1 ist es notwendig, die durch Sensoren oder andere Messinstrumente gesammelten Anlagendaten zur weiteren Verarbeitung an ein Remote Rechenzentrum, eine sogenannte Cloud 10, zu senden.

Mit den bisherigen Lösungen sind jedoch entweder nur begrenzte Abtastraten des Automatisierungssystems 1 möglich oder es sind aufwändige Eingriffe in das Automatisierungssystem 1 notwendig.

Dieses Problem wird durch die Erfindung nun gelöst.

Erfindungsgemäß wird nun eine Kommunikationseinheit 3 mit einer ersten Schnittstelle 3a und einer zweiten Schnittstelle 3b zur Verfügung gestellt. Dabei steht die erste Schnittstelle 3a mit dem Automatisierungssystem 1 in Verbindung und die zweite Schnittstelle 3b mit der Cloud 10 in Verbindung, zur Datenübertragung zwischen dem Automatisierungssystem 1 und der Cloud 10. Dabei werden von der Kommunikationseinheit 3 die von dem Automatisierungssystem 1 erfassten Daten an die Cloud 10 übermittelt.

Dabei ist die erste Schnittstelle 3a wie ein I/O Modul (Input/Output Modul) ausgebildet. D.h. gegenüber dem Automatisierungssystem verhält sich die Kommunikationseinheit 3 wie ein I/O Modul, insbesondere wie eine Profinet I/O Modul. Selbstverständlich sind auch alle anderen I/O Module möglich.

Dabei ist die zweite Schnittstelle 3b wie ein Agent ausgebildet. D.h. gegenüber der Cloud 10 verhält sich die Kommunikationseinheit 3 wie ein Agent.

Zudem weist die Kommunikationseinheit 3 zwei verschiedene Datenübertragungsmoden (Verdichtung und Daten-Sampling)auf. Diese sind, je nachdem welcher Anwendungsfall vorliegt, einstellbar.

Im ersten Datenübertragungsmodus werden die Daten erfasst, insbesondere kontinuierlich erfasst. Anschließend wird eine Aggregationsfunktion und/oder Verdichtungs- und Voranalysefunktion angewendet. Dabei wird unter einer Aggregation/Verdichtung/Voranalyse im Zusammenhang mit der Verwaltung großer Datenmengen das Zusammenfassen einer Reihe von Fakten zu einem einzelnen Fakt bezeichnet.

Aggregationsfunktionen (oder Zusammenfassungsfunktionen)/ Verdichtungs- und Voranalysefunktion sind diejenigen Funktionen, die einer Menge von aus dem Automatisierungssystem 1 gesendeten Daten, welche in einer vorbestimmten Zeit, z.B. alle n Sekunden, gesendet wurden, einem einzelnen Wert zuordnen. Das Ergebnis wird dann stellvertretend für die Daten, d.h. die Quelldaten, aus dem Automatisierungssystem 1 verwendet.

Die Aggregationsfunktionen/Verdichtungs- und Voranalysefunktion können aus einer erfassten Menge von Werten des Automatisierungssystems 1 so z.B. den Mittelwert, das Minimum bzw. Maximum und/oder die Summe und/oder den Durchschnitt bestimmen.

Auch kann die Aggregationsfunktion / Verdichtungs- und Voranalysefunktion die Bestimmung der/des zuletzt erfassten Datensatzes derjenigen Daten, die in einer vorbestimmten Zeit n erfasst/empfangen worden sind, beinhalten.

Vorteilhafterweise ist zumindest ein zweiter Datenübertragungsmodus vorgesehen, wobei aus den durch die Kommunikationseinheit 3 erfassten Daten ein Datenpaket für nachfolgende Verarbeitungsschritte erzeugt wird, welches an die Cloud 10 versendbar ist.

Damit ist gemeint, dass aus den im Wesentlichen kontinuierlich anfallenden Datenströmen des Automatisierungssystems 1 ein Datenpaket für nachfolgende Verarbeitungsschritte erzeugt wird, welches an die Cloud 10 gesendet wird. Dabei handelt es sich hierbei in aller Regel um Rohdaten.

Dadurch können die Quelldaten/Rohdaten in der Cloud 10 verarbeitet werden. Die Daten, d.h. die AO/DO Signale (AD Analog outout, DO, Digital Output) des Automatisierungssystems 1 werden in der Kommunikationseinheit 3 in einer gegebenen Auflösung (Profinet Auflösung) gespeichert/aufgezeichnet und zu einem Datenpaket zusammengeschlossen. Das Datenpaket kann dabei nach ganz unterschiedlichen Kriterien erstellt werden. Anschließend wird das resultierende Datenpaket an die Cloud 10 gesendet, und dort weiterverarbeitet. Als Beispiel kann hier die ausgekoppelte Stromsignatur genannt werden.

Der Start/Stopp des Versendens des Pakets kann durch einen Trigger(bzw. Triggersignal) (Auslösen eines Signals, wenn eine vorgebebene Bedingung/ein auslösendes Ereignis erfüllt ist) erfolgen. Insbesondere kann das Triggersignal durch das Automatisierungssystem 1, z.B. via Profinet DO Signal erfolgen. Damit ist eine exakte Steuerung der Datenauskopplung durch ein Signal des Anwenderprogramms möglich. Auch kann jedoch der Trigger via Cloud 10 erfolgen, z.B. wenn ein Datensampling für eine Detail-Diagnose benötigt wird. Eine zeitgesteuerte Übertragung z.B. einmal pro Stunde, einmal pro Tag ist ebenfalls möglich.

Somit ist ein triggerbarer Transfer von Rohdaten zur Cloud 10 möglich.

Vorteilhafterweise umfasst die Kommunikationseinheit 3 einen Sniffer Mode bzw. ist ein Sniffer Mode auf der Kommunikationseinheit 3 installiert. Durch den Sniffer Mode ist eine Rückwirkung auf das Automatisierungssystem 1 ausgeschlossen, d.h. es ist keine Rückwirkung auf die Anlage möglich, da nur "Lesen" ermöglicht ist. Mit dem Sniffer Mode ist auch eine LAN-Analyse möglich. Dabei ist mit "Sniffer" die gesamte Gattung der LAN-Analyzer gemeint.

Dies kann z.B. mit einen TAP-Anschluss (TAP=terminal access point) realisiert werden.

Zwischen der Kommunikationseinheit 3 und der Cloud 10 kann zudem ein weiterer Proxy/Gateway 5 zwischengeschaltet sein. Dies führt zu einer erhöhten IT-Security.

Durch die Erfindung ist eine Verbindung von der Cloud 10 mit dem Automatisierungssystem 1 z.B. einem Profinet Feldbus möglich, wobei das Problem der Datenreduktion bzw. Auswahl beim Übergang vom Automatisierungssystem 1 zu der Cloud 10 gelöst ist. Durch die einstellbare Umsetzung der Erfindung kann die hohe Datenrate am Feldbus in eine niedrigere Rate für Cloud Transfer transformiert werden.

Die Erfindung kann durch ein Engineering via Standard Tools des vorhandenen Systems vorgenommen werden, d.h. dieses stellt sich für das vorhandene System dar wie die Anbindung einer Standard Profinet I/O Baugruppe oder einer sonstigen Feldbus I/O Baugruppe, z.B. Profibus. Zudem stellt die Erfindung lediglich eine minimale CPU-Last für z.B. den Master in dem Automatisierungssystem 1 dar.

Durch die Erfindung sind extrem hohe Abtastraten möglich; diese können bei einigen Miko-Sekunden liegen.

Dabei kann es sich bei der Cloud 10 und dem Automatisierungssystem 1 um physikalisch voneinander getrennte Einheiten an physisch nicht selben lokalen Standorten handeln.

## Patentansprüche

1. Netzwerksystem umfassend zumindest
- einen ersten Netzwerkteilnehmer und einen zweiten Netzwerkteilnehmer sowie eine Kommunikationseinheit (3) mit einer ersten Schnittstelle (3a) und einer zweiten Schnittstelle (3b), wobei die erste Schnittstelle (3a) mit dem ersten Netzwerkteilnehmer und die zweite Schnittstelle (3b) mit dem zweiten Netzwerkteilnehmer in Verbindung steht, zur Datenübertragung zwischen dem ersten Netzwerkteilnehmer und dem zweiten Netzwerkteilnehmer,
- wobei der erste Netzwerkteilnehmer in einem Automatisierungsnetz eines Automatisierungssystems (1) angeordnet ist,
- wobei der zweite Netzwerkteilnehmer eine Cloud-Computing Infrastruktur aufweist,
**dadurch gekennzeichnet, dass**
- die erste Schnittstelle (3a) der Kommunikationseinheit (3) als Ein-/Ausgabemodul (I/O Modul) ausgestaltet ist,
- die zweite Schnittstelle (3b) der Kommunikationseinheit (3) als Agent ausgestaltet ist.

2. Netzwerksystem nach Anspruch 1,
**dadurch gekennzeichnet, dass** die Kommunikationseinheit (3) zumindest zwei Datenübertragungsmoden zur Datenübertragung der vom ersten Netzwerkteilnehmer erfassten Daten an den zweiten Netzwerkteilnehmer aufweist.

3. Netzwerksystem nach Anspruch 2,
**dadurch gekennzeichnet, dass** zumindest eine der Datenübertragungsmodus ein erster Datenübertragungsmodus ist, bei dem die Daten erfasst, insbesondere kontinuierlich erfasst werden, und anschließend eine Aggregationsfunktion oder/und sonstige Voranalysefunktion angewendet wird.

4. Netzwerksystem nach Anspruch 3,
**dadurch gekennzeichnet, dass** die Aggregationsfunktion oder/und sonstige Voranalysefunktion die Bildung des Mittelwerts und/oder des Minimums bzw. Maximums und/oder der Summe derjenigen Daten, die in einer vorbestimmten Zeit n erfasst worden sind, beinhaltet.

5. Netzwerksystem nach Anspruch 4,
**dadurch gekennzeichnet, dass** die Aggregationsfunktion oder/und sonstige Voranalysefunktion die Bestimmung der/des zuletzt erfassten Datensatzes derjenigen Daten, die in einer vorbestimmten Zeit n erfasst worden sind, beinhaltet.

6. Netzwerksystem nach Anspruch 2,
**dadurch gekennzeichnet, dass** zumindest einer der Datenübertragungsmodus ein zweiter Datenübertragungsmodus ist, wobei aus den von der Kommunikationseinheit (3) erfassten Daten ein Datenpaket für nachfolgende Verarbeitungsschritte erzeugt ist, welches an die Cloud-Computing Infrastruktur des zweiten Netzwerkteilnehmers versendbar ist.

7. Netzwerksystem nach Anspruch 6,
**dadurch gekennzeichnet, dass** die Versendung des Datenpaketes durch einen Trigger erfolgt.

8. Netzwerksystem nach Anspruch 7,
**dadurch gekennzeichnet, dass** der Trigger durch den ersten Netzwerkteilnehmer erfolgt.

9. Netzwerksystem nach einem der vorhergehenden Ansprüche,
**dadurch gekennzeichnet, dass** die Kommunikationseinheit (3) einen Sniffer Mode umfasst.

10. Netzwerksystem nach einem der vorhergehenden Ansprüche,
**dadurch gekennzeichnet, dass** durch den Sniffer Mode eine Rückwirkung auf den ersten Netzwerkteilnehmer ausgeschlossen ist.

11. Netzwerksystem nach einem der Ansprüche 9 und 10,
**dadurch gekennzeichnet, dass** die Kommunikationseinheit einen TAP-Anschluss (TAP=terminal access point) umfasst.

12. Netzwerksystem nach einem der vorhergehenden Ansprüche,
**dadurch gekennzeichnet, dass,** der erste Netzwerkteilnehmer ein PROFINET (Process Field Network) System umfasst.

13. Verfahren zur Datenübertragung in einem Netzwerksystem umfassend der Schritte:
- Bereitstellen eines ersten Netzwerkteilnehmers und eines zweiten Netzwerkteilnehmer sowie eine Kommunikationseinheit(3) mit einer ersten Schnittstelle (3a) und einer zweiten Schnittstelle (3b), wobei die erste Schnittstelle (3a) mit dem ersten Netzwerkteilnehmer und die zweite Schnittstelle (3b) mit einem zweiten Netzwerkteilnehmer zur Datenübertragung zwischen dem ersten Netzwerkteilnehmer und dem zweiten Netzwerkteilnehmer in Verbindung steht,
- Anordnen des ersten Netzwerkteilnehmers in einem Automatisierungsnetz eines Automatisierungssystems (1),
- Bereitstellen einer Cloud-Computing Infrastruktur im zweiten Netzwerkteilnehmer,
**dadurch gekennzeichnet, dass**
- die erste Schnittstelle (3a) der Kommunikationseinheit (3) als Ein-/Ausgabemodul (I/O Modul) ausgestaltet wird,
- die zweite Schnittstelle (3ba) der Kommunikationseinheit (3) als Agent ausgestaltet wird.

14. Verfahren zur Datenübertragung in einem Netzwerksystem nach Anspruch 13,
**dadurch gekennzeichnet, dass** in der Kommunikationseinheit (3) zumindest zwei Datenübertragungsmoden vorgesehen sind, wobei die Datenübertragung der vom ersten Netzwerkteilnehmer erfassten Daten an den zweiten Netzwerkteilnehmer durch eine der zumindest beiden Datenübertragungsmoden vorgenommen wird.

15. Verfahren zur Datenübertragung in einem Netzwerksystem nach Anspruch 14,
**dadurch gekennzeichnet, dass** die zumindest zwei Datenübertragungsmoden einstellbar sind.

16. Verfahren zur Datenübertragung in einem Netzwerksystem nach Anspruch 14 oder 15,
**dadurch gekennzeichnet, dass** zumindest eine der Datenübertragungsmoden ein erster Datenübertragungsmodus ist, bei dem die Daten kontinuierlich erfasst werden und anschließend eine Aggregationsfunktion oder/und sonstige Voranalysefunktion angewendet wird.

17. Verfahren zur Datenübertragung in einem Netzwerksystem nach Anspruch 14,
**dadurch gekennzeichnet, dass** zumindest eine der Datenübertragungsmoden ein zweiter Datenübertragungsmodus ist, bei dem die Daten erfasst werden und wobei aus den Daten ein Datenpaket für nachfolgende Verarbeitungsschritte erzeugt wird, welches an die Cloud-Computing Infrastruktur des zweiten Netzwerkteilnehmers versendet wird.

18. Verfahren zur Datenübertragung in einem Netzwerksystem nach Anspruch 17,
**dadurch gekennzeichnet, dass** die Versendung des Datenpaketes nach Ausführen eines Triggers durch den ersten Netzwerkteilnehmer erfolgt.

19. Verfahren zur Datenübertragung in einem Netzwerksystem nach einem der vorherigen Ansprüchen 13-18,
**dadurch gekennzeichnet, dass** auf der Kommunikationseinheit (3) ein Sniffer Mode ausgeführt wird.
